# EUROPEAN PATENT SPECIFICATION

(11) **EP 3 323 675 B1**
(45) Date of publication and mention of the grant of the patent: **01.05.2019**
(21) Application number: 17001842.8
(22) Date of filing: 09.11.2017
(51) Int. Cl.: B60P 3/075, B60P 7/08

(54) **FASTENING SYSTEM FOR HOLDING BELTS**
BEFESTIGUNGSSYSTEM ZUM HALTEN VON GURTEN
SYSTÈME DE FIXATION POUR CEINTURES DE RETENUE

(30) Priority: 18.11.2016 IT 201600116512
(43) Date of publication of application: 23.05.2018
(73) Proprietor: Rolfo S.p.A., 12042 Bra (CN) (IT)
(72) Inventor: Rolfo, Giorgio, 12042 BRA (CN) (IT); Arnulfo, Elio, 12042 BRA (CN) (IT)
(74) Representative: Garavelli, Paolo

(56) References cited:
- EP-A2- 2 705 983
- DE-A1- 19 514 811
- DE-U1- 29 724 160
- US-A- 2 591 986
- US-A1- 2007 212 185
- US-A1- 2016 031 359
- US-B1- 6 328 511

## Description

The present invention refers to a fastening system for holding belts aimed in particular to be used for transporting motor vehicles on loading platforms.

In the vehicle transport field, fastening systems of vehicles to loading platforms, for example vehicle-carrying trucks, have been subjected to an evolution mostly aimed to their use practicality and experience. From the earlier improvised systems, the evolution has been, at least in Europe, towards systems based on loading platforms equipped with upwards deep drawn oval holes, with the double function of increasing the adherence of tires and of providing a practically continuous series of fastening positions, and a mx of the so-called "slipping-preventing wedges" which are fastened to oval holes and three-point holding belts equipped with fastening systems obtained as simple hooks also aimed to be mainly inserted into the oval holes. Number and arrangement of wedges and belts are often determined by the loading standards issued by the various manufacturing companies and also by legal standards (see, for example, German Standards VDI 2700 8.1 and 8.2).

In the standards, however, there are only some requirements, since embodiments and forces which must be taken into account for the correct dimensioning of belts and/or wedges are not described in detail.

The recent technical evolution in the field of cars has also introduced suspension systems which, when the car is transported on the loading platform, induce greater forces and accelerations on traditionally used fastening systems. The experience shows that, under certain situations, sheets with oval holes have permanent distortions next to the contact area with the belt hook. This, in addition to deteriorate the sheets, also decrease the pre-load of the belt itself, and therefore of the fastening forces given to the vehicle wheel transported on the loading platform. Therefore, a decrease occurs of the vehicle fastening safety.

The problem of known fastening system for the holding belts therefore is the fact that they currently appear as universal hooks, whose shape is not optimum for fastening oval holes: in fact, since the contact areas between hooks and oval holes of the loading platform within which they are inserted are very small (ideally spots), even relatively low forces can create very high tensions and pressures, which permanently distort the contact area itself.

US-A1-200/212185 discloses a fastening system for holding belts having hook-like interposing elements.

Therefore, object of the present invention is solving the above prior art problems, by providing a fastening system for holding belts, aimed in particular to be used for transporting motor vehicles on loading platforms, which allows minimizing the tension concentrations exerted by the belts on the platform itself and reduce, if not remove, the formation of permanent deformations next to the contact area of the oval holes of the loading platform.

Moreover, an object of the present invention is providing a fastening system for holding belts which is dedicated to each (usually three) of the different fastening points of the belts on the oval holes of the loading platform.

Another object of the present invention is providing a fastening system which can be correctly customized depending on the specific fastening point to which it must be applied in terms of direction along which the system itself applies the force to the loading platform and, therefore, for the different contact area between oval hole and fastening system.

The above and other objects and advantages of the invention, as will appear from the following description, are obtained with a fastening system for holding belts as claimed in claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figure 1 shows a side view of a first preferred embodiment of the fastening system according to the present invention;
- Figure 2 shows a top perspective view of the first preferred embodiment of the fastening system according to the present invention;
- Figure 3 shows a bottom perspective view of the first preferred embodiment of the fastening system according to the present invention;
- Figure 4 shows a side view of the first preferred embodiment of the fastening system according to the present invention in its operating position;
- Figure 5 shows a top perspective view of the first preferred embodiment of the fastening system according to the present invention in its operating position;
- Figure 6 shows a bottom perspective view of the first preferred embodiment of the fastening system according to the present invention in its operating position;
- Figure 7 shows a top perspective view of a second preferred embodiment of the fastening system according to the present invention;
- Figure 8 shows a detailed side view of the second preferred embodiment of the fastening system according to the present invention in its operating position;
- Figure 9 shows a top perspective view of the second preferred embodiment of the fastening system according to the present invention in its operating position;
- Figure 10 shows a detailed bottom perspective view of the second preferred embodiment of the fastening system according to the present invention in its operating position;
- Figure 11 shows a top perspective view of a third preferred embodiment of the fastening system according to the present invention in its operating position;
- Figure 12 shows a bottom perspective view of the third preferred embodiment of the fastening system according to the present invention in its operating position;
- Figure 13 shows a top perspective view of the third preferred embodiment of the fastening system according to the present invention in its operating position and during its use;
- Figure 14 shows a side view of the third preferred embodiment of the fastening system according to the present invention in its operating position and during its use;
- Figures 15 to 18 show perspective views of some installation steps of the third preferred embodiment of the fastening system according to the present invention;
- Figure 19 shows a side view of a preferred embodiment of the fastening system according to the present invention in its operating position according to a preferred use mode; and
- Figure 20 shows a top perspective view of the fastening system of Figure 19.

With reference to the Figures, it is possible to note that the fastening system for holding belts according to the present invention, aimed in particular to be used for transporting motor vehicles on loading platforms, comprises three interposing elements 1A, 1B, 1C arranged between a belt 3 and a platform 5, the interposing elements 1A, 1B, 1C being equipped with cooperating means with the platform 5 adapted to minimize the tension concentrations induced by a force exerted by the belt 3 on the platform 5.

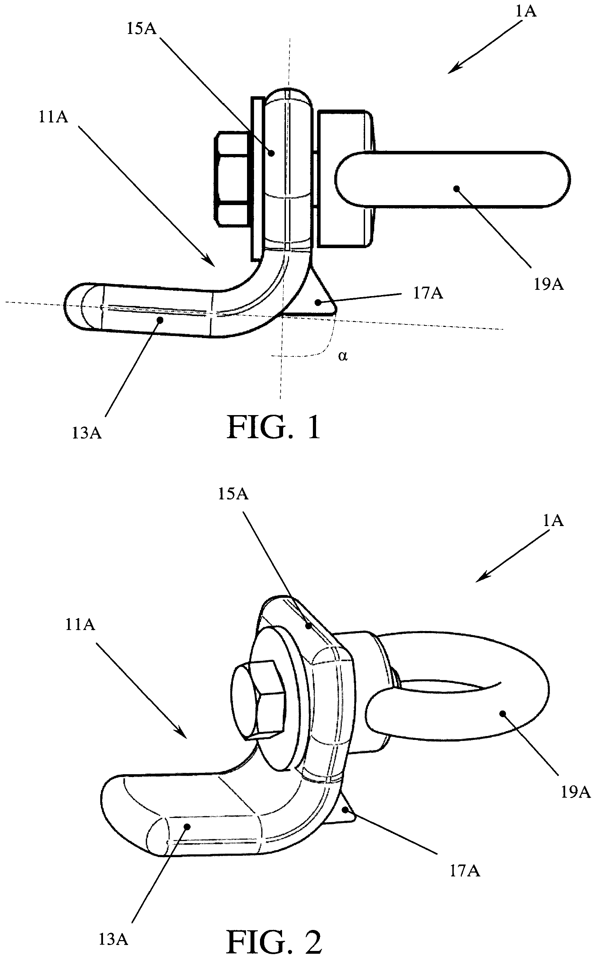

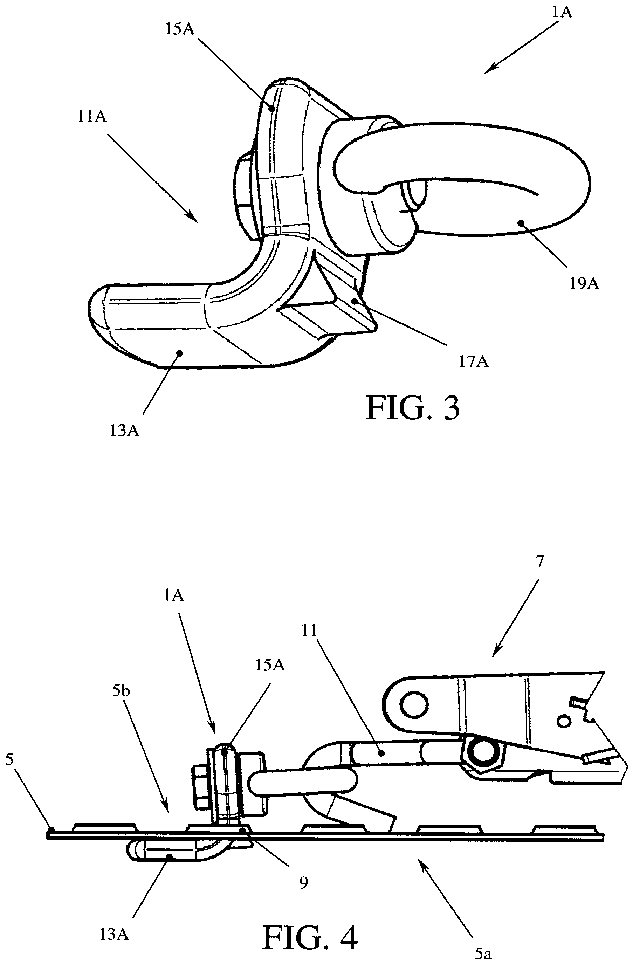

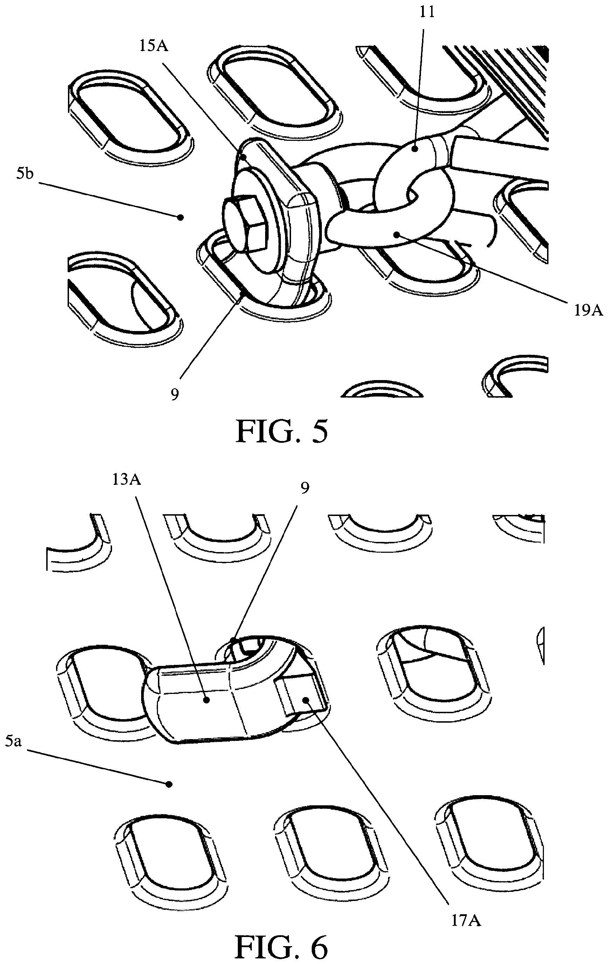

With reference then in particular to Figures 1 to 6, it is possible to note that the fastening system according to the present invention comprises a first interposing element 1A composed of at least one first fastening element of at least one first terminal portion of the belt 3, typically by interposing at least one tensioning device 7, such as, for example, a ratchet of the type known in the art. In particular, in order to minimize the tension concentrations induced by the force exerted by the belt on the platform 5, force which is substantially tangential to the platform 5 itself, the cooperating means are composed of at least one supporting body 11A adapted to be partially inserted through at least one opening 9 of the platform 5 (the opening 9 being, for example, a through oval hole of the platform 5), the supporting body 11A comprising at least one engaging portion 13A adapted to go out from a first face 5a of the platform 5 (for example through the oval hole) and at least one fastening portion 15A for connecting the belt adapted to go out from a second face 5b of the platform 5 (preferably always through the oval hole), the second face 5b being opposite to the first face 5a.

Preferably, the engaging portion 13A has a substantially flat shape with rounded edges.

Preferably, the supporting body 11A could have, seen laterally, a shape substantially as an "L" in which the engaging portion 13A is inclined with respect to the fastening portion 15A by an angle α included between 80° and 100°.

The engaging portion 13A can be equipped with at least one projection 17A adapted to prevent that the engaging portion 13A can be accidentally withdrawn from the opening 9 of the platform 5.

The fastening portion 15A can be equipped with at least one hook or eyelet 19A, preferably of the rotating type, aimed to allow the connection of the terminal portion of the belt or of the tensioning device 7, for example by interposing at least one hook 11 or other similar connecting means: in particular, the hook or eyelet 19A can have a rounded shape and mechanical characteristics suitable for well supporting the tension exerted by the belt; moreover, the hook or eyelet 19A, being rotatable, can offer a good fastening point for the hook 11 of the belt and can be suited at different angles.

As clearly results also from Figures 1 to 6, the engaging portion 13A advantageously allows distributing the pressure exerted by the traction of the belt on the majority of the edge of the opening 9, and in particular of the oval hole, in order to drastically reduce the specific pressure and avoid flexion phenomena of the sheet composing the platform 5. In particular, the possible projection 17A opposes the accidental disengagement of the first interposing element 1A since the belt traction force tends to fit more and more in the engaging portion 13A, preventing it from coming out and requiring an accurate manoeuvre to free it from the opening 9 of the platform 5.

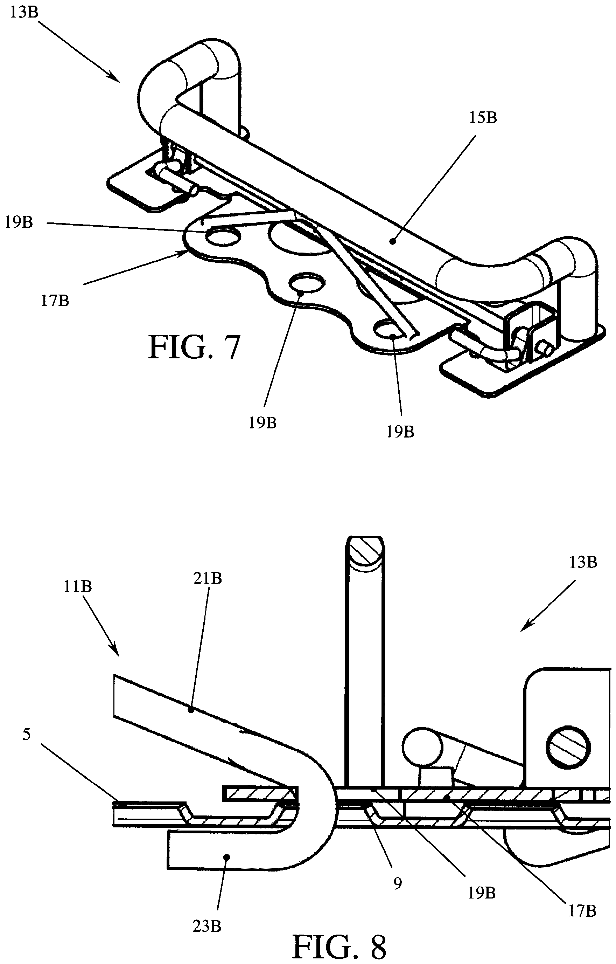

With reference instead, in particular, to Figures 7 to 10, it is possible to note that, the fastening system according to the present invention comprises a second interposing element 1B comprising at least one transmission element 11B of at least one intermediate portion of the belt.

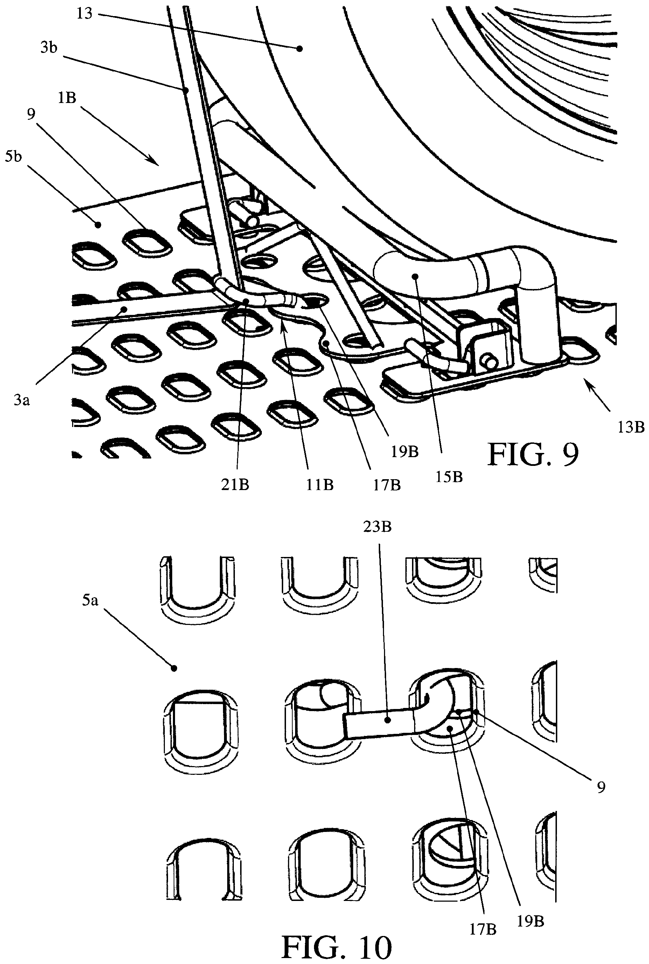

As clearly appears, in particular, from Figure 9, the belt applies a force which is the resultant of the two components, the one tangential to the platform 5, deriving from the portion of the belt 3a, and the one substantially perpendicular to the platform 5 itself deriving from the portion of the belt 3b, usually aimed to be wound around a tire 13: the vector composition of the two components thereby determines a force which has a direction with an angle approximately at 45° with respect to the sheet platform 5 and a greater intensity.

In this case, in order to minimize the concentrations of tensions induced by the force exerted by the belt on the platform 5, the cooperating means are composed of at least one reinforcing plate 17B equipped with one or more through openings 19B, the plate 17B being adapted to abut on the surface on the platform 5 so that at least one through opening 19B is at least partially next to at least one of the openings 9 (oval hole) of the platform 5 itself. The transmission element 11B is then composed of a supporting body adapted to be partially inserted through at least one opening 9 of the platform 5 and at least one through opening 19B of the reinforcing plate 17B corresponding therewith, the supporting body comprising at least one transmission portion 21B of the belt adapted to go out from the second face 5b of the platform 5 (for example through the oval hole) and at least one fastening portion 23A of the transmission element 11B to the openings 9, 19B adapted to go out from the first face 5a of the platform 5 (preferably always through the oval hole and the through opening 19B of the reinforcing plate 17B). The shape of the through opening 19B of the reinforcing plate 17B can therefore be optimized, with respect to the possibly oval shape of the opening 9 of the platform 5, to receive the fastening portion 23A and the additional thickness offered by the reinforcing plate 17B itself, which contributes to stiffen and reinforce the sheet composing the platform 5.

According to a preferred embodiment of the system according to the present invention, the second interposing element 1B further comprises at least one wheel-stopping wedge 13B which, as known, is generally a device normally used coupled with the belts to fasten the vehicles to the loading platforms and, for such purpose, comprising at least one stop abutment 15B against which, usually, the tire 13 is rested: advantageously, the wheel-stopping wedge 13B of the second interposing element 1B comprises at least one reinforcing plate 17B. Obviously, all other component parts and functionalities of the wheel-stopping wedge 13B can be among those already known in the art for which it is not obviously deemed necessary to provide any further specification.

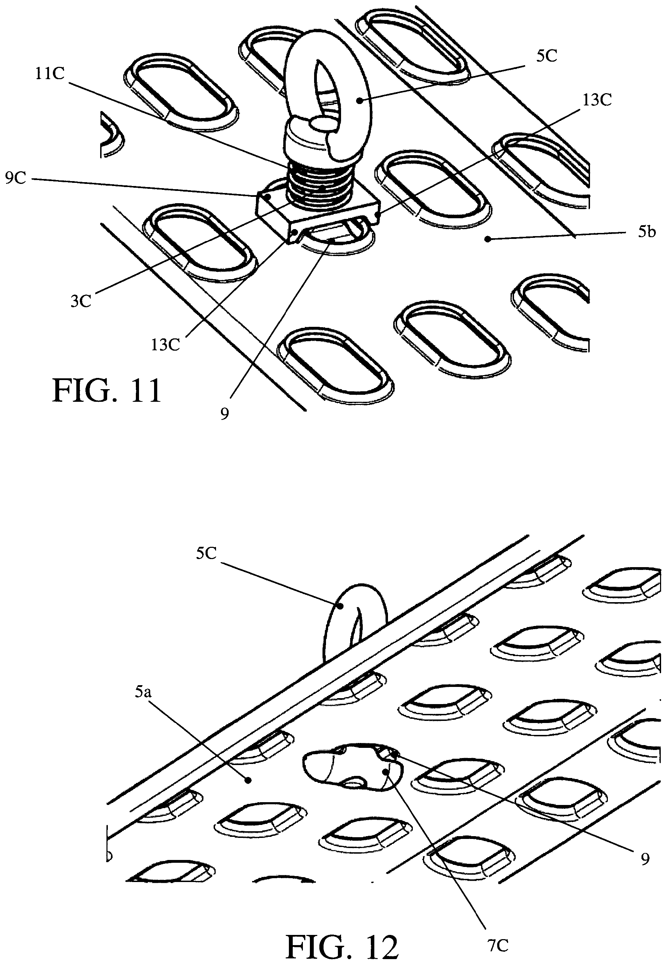

With reference instead, in particular, to Figures 11 to 18, it is possible to note that the fastening system according to the present invention comprises a third interposing element 1C composed of at least one second fastening element of at least one second terminal portion of the belt 3, typically by interposing at least one connecting device 15 such as, for example, a hook of a type known in the art.

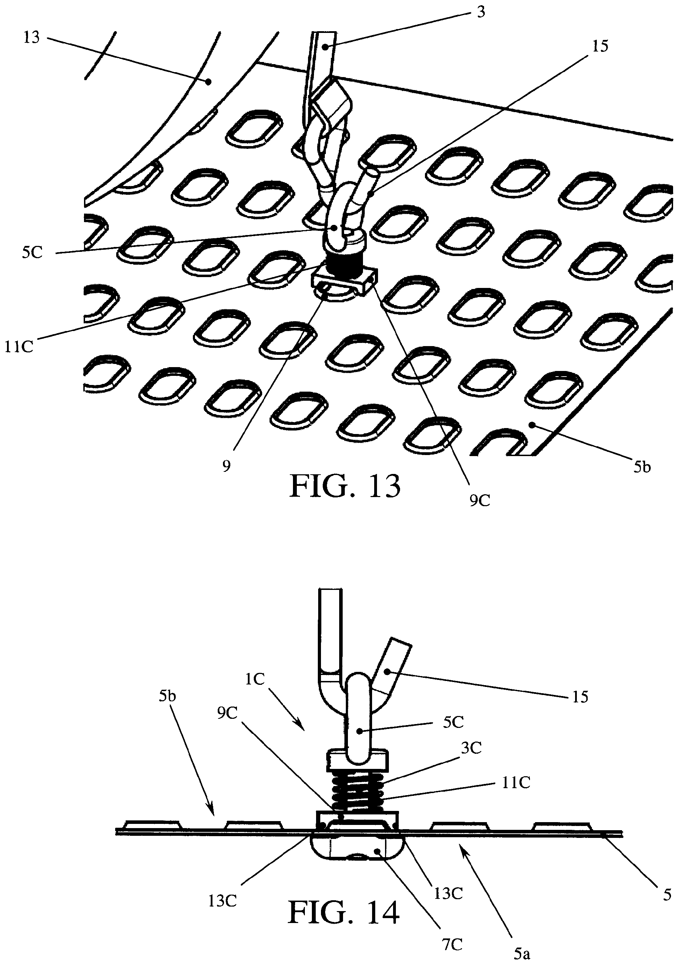

In this case, it can be noted that, in particular from Figure 14, the belt 3 applies an almost perpendicular force to the platform 5: the contact with the connecting device 15 is therefore very critical and determines out-of-plane flexural forces and high localized contact pressure.

In this case, in order to minimize the tension concentrations induced by the force exerted by the belt on the platform 5, the cooperating means are composed of at least one central pin 3C adapted to be inserted at least partially through at least one opening 9 of the platform 5 (the opening 9 being, for example, a through oval hole of the platform 5), the central pin 3C having a first end adapted to go out from the second face 5b of the platform 5 (for example through the oval hole) and a second end opposite to the first end adapted to go out from the first face 5a of the platform 5 (preferably always through the oval hole), the first end being equipped with at least one fastening portion 5C for connecting the belt (for example by interposing the connecting device 15) and the second end being equipped with at least one locking/unlocking device 7C adapted to allow, when taken in its operating unlocking position, the passage of at least the second end through the opening 9 of the platform 5 and to prevent, when taken in its operating locking position, the passage of at least the second end through the opening 9 of the platform 5.

The cooperating means of the third interposing element 1C further comprise at least one abutment element 9C having bigger sizes with respect to the opening 9 of the platform 5 (therefore not passing through the opening 9) and axially sliding along the central pin 3C and at least one elastic means 11C (such as, for example, at least one helical spring) interposed between the abutment element 9C and the fastening portion 5C along the central pin 3C itself. If the opening 9 of the platform 5 is, like in the case show in the Figure, made as an oval hole having a deep drawn part projecting from the second face 5b of the platform 5, the abutment element 9C can be equipped with one or more projections 13C adapted to allow the element 9C itself to abut onto the plane surface surrounding the oval hole, avoiding mechanical interferences with the deep drawn projection of the oval hole itself.

In particular, the fastening portion 5C can be equipped with at least one hook or eyelet, preferably integral with the pin 3C, aimed to allow the connection of the end portion of the belt 3 or of the connecting device 15.

In particular, the locking/unlocking device 7C can be made as at least one pawl rotating around a central axis of the central pin 3C between the operating unlocking position in which the passage of the second end of the central pin 3C through the opening 9 is allows, and the operating locking position in which the passage of the second end of the central pin 3C through the opening 9 is prevented, and vice versa. Preferably, the pawl and the fastening portion 5C are integral in rotation with the central pin 3C: consequently, by rotating the fastening portion 5C, it is possible to take in rotation the pawl between its operating positions through the opening 9, above all when the first face 5a of the platform 5 is easily accessed by the hands of an operator.

Preferably, the pawl can be equipped with one or more suitable planes 15C shaped in order to be coupled with the perimeter portion of the opening 9 of the first face 5a of the platform 5 against which it is aimed to abut.

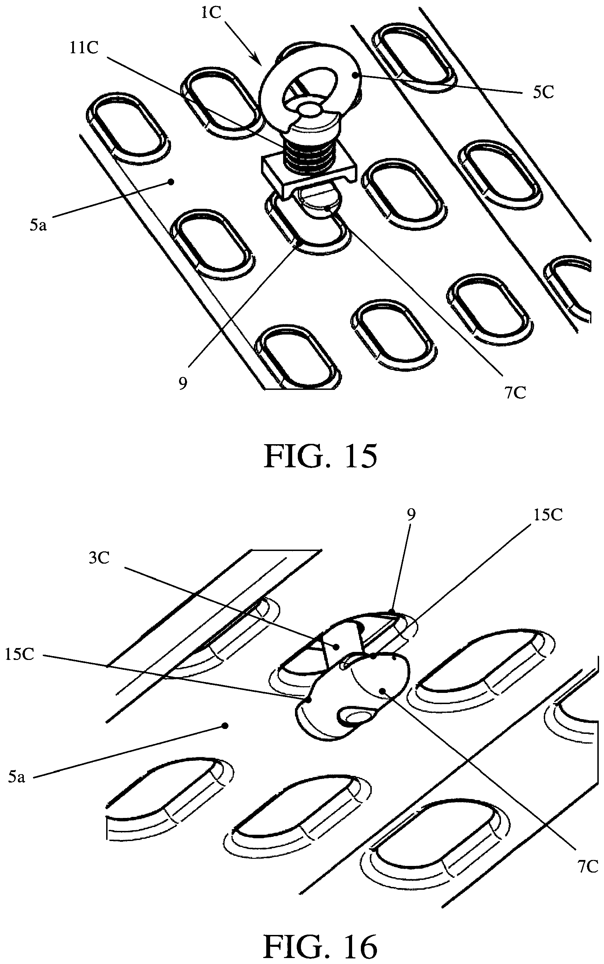

With reference then to Figures 15 to 18, some installation steps are shown for the third interposing element 1C of the fastening system according to the present invention inside an opening 9 (oval hole) of a loading platform 5. Starting then from the position of Figure 15, when the third interposing element 1C is completely outside the opening 9 and the locking/unlocking device 7C (pawl) is in its first operating position, after having inserted the locking/unlocking device 7C at least partially through the opening 9, the abutment element 9C abuts onto the platform 5, and in particular onto the surface surrounding the opening 9 itself through the projections 13C.

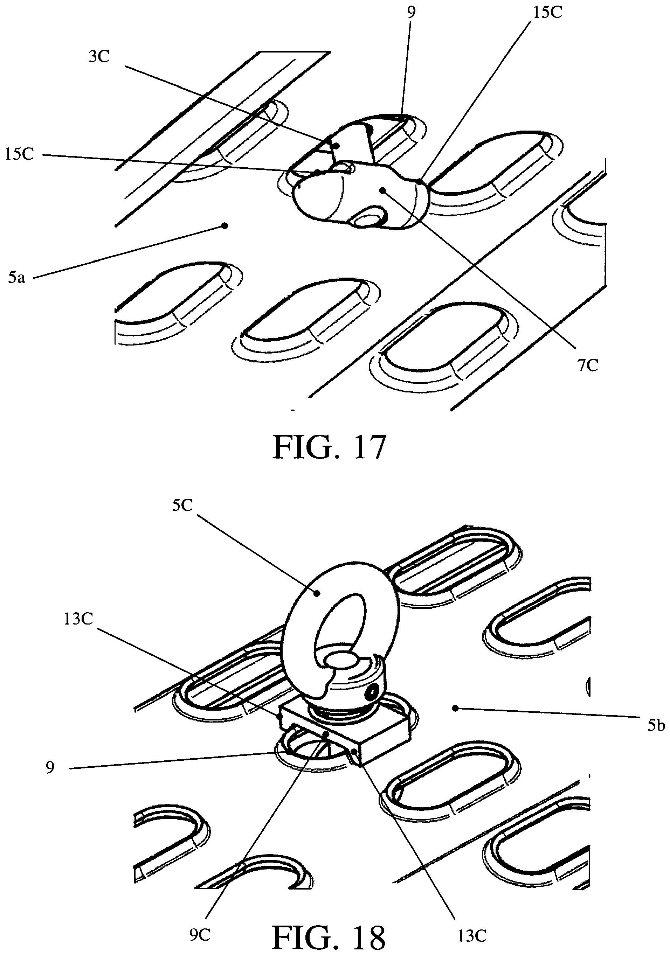

By then pressing the third interposing element 1C axially along the central pin 3C, for example by exerting a pressure onto the fastening portion 5C, towards the second face 5b of the platform 5, the elastic means 11C are compressed (as shown, for example, in Figure 18) and the locking/unlocking device 7C is taken to cross the opening 9 going out of the first face 5a of the platform 5 itself (as shown, for example, in Figure 16) and it is possible to take the locking/unlocking device 7C to its operating locking position (by rotating, for example, the pawl as shown in Figure 17 directly or by taking it to rotate by rotating the fastening portion 5C).

Ceasing to exert the axial pressure on the central pin 3C, for example cancelling the pressure onto the fastening portion 5C, the elastic means 11C extend and the pawl is inserted with the planes 15C against the corresponding perimeter portions of the opening 9. In particular, in this position, the pawl cannot rotate any more, because it is partially inserted into the oval hole (opening 9) and remains strongly fastened to the first face 5c of the platform 5, without risking to accidentally come out. By thereby connecting the belt 3 to the fastening portion 5C, for example through the connecting device 15, the traction force does not tend to disengage the pawl, which can be unfastened only by acting contrarily to the insertion, and therefore with a voluntary manoeuvre from the operator.

Obviously, it is then possible, by contrarily performing the above described pertinent steps, it is possible to take back the locking/unlocking device 7C, and in particular the pawl, to its unlocking position and extract the third interposing element 1C from the opening 9 of the platform 5.

The third interposing element 1C, by being inserted between the connecting device 15 and the sheet of the platform 5, consequently allows obtaining a force distributed on a wide area, strongly reducing the above tensions.

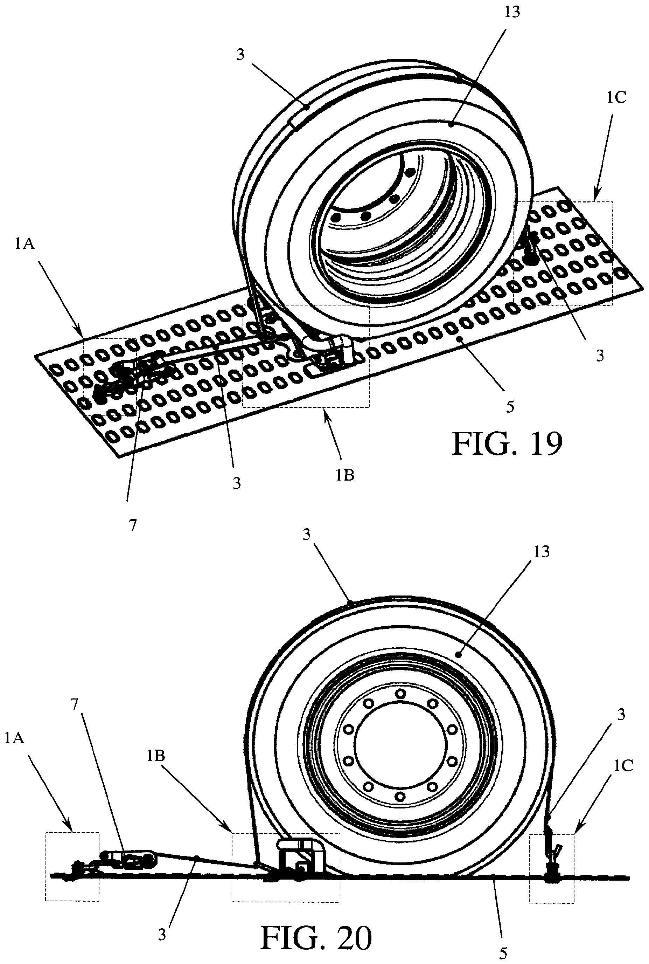

Figures 19 and 20 show, as an example, the fastening system according to the present invention in which the system itself simultaneously comprises all three above described interposing elements 1A, 1B and 1C. As known, in fact, for fastening a vehicle to a loading platform, one or more belts are traditionally used, one or more of the belts being aimed to be wound around the vehicle tire tread, to be then fastened and tensioned by suitable hooks or gaffs and ratchets in the openings (oval holes) of the platform. Figures 19 and 20 then show the fastening system according to the present invention in which the belt 3 is, in its second terminal portion, connected to the third interposing element 1C, partially wound around the tire 13, transmitted by the second interposing element 1B and finally connected, in its first terminal portion, to the first interposing element 1A where it is pun under traction through the tensioning device 7, allowing, next to each interposing element 1A, 1B and 1C, to minimize the tension concentrations induced by the force exerted by the belt 3 on the platform 5.

## Claims

1. Fastening system for holding belts, aimed in particular to be used for transporting motor vehicles on loading platforms, wherein it comprises three interposing elements (1A; 1B; 1C) arranged between said belt (3) and said platform (5), said interposing elements (1A; 1B; 1C) being equipped with cooperating means with said platform (5) adapted to minimize tension concentrations induced by a force exerted by said belt (3) on said platform (5), and wherein:
- a first interposing element (1A) is composed of at least one first fastening element of at least one first terminal portion of said belt (3), said cooperating means being designed to minimize a tension concentration induced by a belt force which is tangential to said platform (5), said cooperating means being composed of at least one supporting body (11A) adapted to be partially inserted through at least one opening (9) of said platform (5), said supporting body (11A) comprising at least one engaging portion (13A) adapted to go out from a first face (5a) of said platform (5) and at least one fastening portion (15A) for connecting said belt adapted to go out from a second face (5b) of said platform (5), said second face (5b) being opposite to said first face (5a), said supporting body (11A) having a shape substantially as an "L" in which said engaging portion (13A) is inclined with respect to said fastening portion (15A) by an angle α included between 80° and 100°, said engaging portion (13A) being equipped with at least one projection (17A);
- a second interposing element (1B) comprises at least one transmission element (11B) of at least one intermediate portion of said belt, said cooperating means being designed to minimize a tension concentration induced by a belt force with a direction with an angle of 45° with respect to said platform (5), said cooperating means being composed of at least one reinforcing plate (17B) equipped with a plurality of through openings (19B), said plate (17B) being adapted to abut on the surface on said platform (5) so that at least one through opening (19B) is at least partially next to at least one of said openings (9) of said platform (5), said transmission element (11B) being composed of a supporting body adapted to be partially inserted through at least one opening (9) of said platform (5) and at least one through opening (19B) of said reinforcing plate (17B), said supporting body comprising at least one transmission portion (21B) of said belt adapted to go out from a second face (5b) of said platform (5) and at least one fastening portion (23A) of said transmission element (11B) to said openings (9; 19B) adapted to go out from a first face (5a) of said platform (5); and
- a third interposing element (1C) is composed of at least one second fastening element of at least one second terminal portion of said belt (3), said cooperating means being designed to minimize a tension concentration induced by a belt force which is perpendicular to said platform (5), said cooperating means being composed of at least one central pin (3C) adapted to be inserted at least partially through at least one opening (9) of said platform (5), said central pin (3C) having a first end adapted to go out from a second face (5b) of said platform (5) and a second end opposite to said first end adapted to go out from a first face (5a) of said platform (5), said first end being equipped with at least one fastening portion (5C) for connecting said belt and said second end being equipped with at least one locking/unlocking device (7C) adapted to allow, when taken to its operating unlocking position, a passage of at least said second end through said opening (9) of said platform (5), and to prevent, when taken to its operating locking position, a passage of at least said second end through said opening (9) of said platform (5), said cooperating means of said third interposing element (1C) comprising at least one abutment element (9C) having bigger sizes with respect to said opening (9) of said platform (5) and axially sliding along said central pin (3C) and at least one elastic means (11C) interposed between said abutment element (9C) and said fastening portion (5C) along said central pin (3C), said abutment element (9C) being equipped with one or more projections (13C).

2. System according to the previous claim, **characterized in that** said engaging portion (13A) has a substantially flat shape with rounded edges.

3. System according to claim 1, **characterized in that** said second interposing element (1B) comprises at least one wheel-stopping wedge (13B), said wheel-stopping wedge (13B) comprising at least one reinforcing plate (15B).

4. System according to claim 1, **characterized in that** said locking/unlocking device (7C) is at least one pawl rotating around a central axis of said central pin (3C) between said operating unlocking position and said operating locking position, and vice versa.

5. System according to the previous claim, **characterized in that** said pawl and said fastening portion (5C) are integral in rotation with said central pin (3C).

6. System according to any one of the previous claims, **characterized in that** said pawl is equipped with one or more planes (15C) shaped to be coupled with a perimeter portion of said opening (9) of said first face (5a) of said platform (5).

## Patentansprüche

1. Befestigungssystem für Befestigungsriemen, das insbesondere für die Verwendung im Fahrzeugtransport auf Ladeflächen bestimmt ist, wobei dieses drei Zwischenelemente enthält (1A; 1B; 1C), die am genannten Riemen (3) und an der genannten Ladefläche (5) angebracht sind, die genannten Zwischenelemente (1A; 1B; 1C) sind mit Mitwirkungsmitteln der genannten Ladefläche (5) ausgestattet, die dazu dienen, die Konzentrationen der Spannungen zu minimieren, die durch eine vom genannten Riemen (3) auf die genannte Ladefläche (5) ausgeübte Kraft induziert werden, und in dem:
- ein erstes Zwischenelement (1A) aus mindestens einem ersten Befestigungselement von mindestens einem Endteil des genannten Riemens (3) besteht, die genannten Mitwirkungsmittel wurden dazu entwickelt, eine Konzentration der Spannung zu minimieren, die durch eine Kraft des Riemens induziert wird, welcher tangential zur genannten Ladefläche (5) ist, die genannten Mitwirkungsmittel bestehen aus mindestens einem Stützkörper (IIA), der dazu dient, teilweise durch mindestens eine Öffnung (9) der genannten Ladefläche (5) eingeführt zu werden, der genannte Stützkörper (11A) enthält mindestens einen Steckteil, der dazu dient, aus einer ersten Seite (5a) der genannten Ladefläche (5) auszutreten, und mindestens einen Befestigungsteil (15A) zur Verbindung des genannten Riemens, der dazu dient, aus der zweiten Seite (5b) der genannten Ladefläche (5) auszutreten, die genannte zweite Seite (5b) liegt gegenüber der genannten ersten Seite (5a), der genannte Stützkörper (11A) hat eine grundlegend "L-förmige" Form, in der der genannte Steckteil (13A) gegenüber dem genannten Befestigungsteil (15A) in einem Winkel α zwischen 80° und 100° geneigt ist, der genannte Steckteil (13A) ist mit mindestens einer Erhöhung (17A) ausgestattet;
- ein zweites Zwischenelement (1B) mindestens ein Umlenkelement (11B) von mindestens einem Zwischenteil des genannten Riemens enthält, die genannten Mitwirkungsmittel wurden entwickelt, um eine Konzentration einer Spannung zu minimieren, die durch eine Kraft des Riemens mit einer Richtung mit einem 45 °-Winkel gegenüber der genannten Ladefläche (5) induziert wird, die genannten Mitwirkungsmittel bestehen aus mindestens einer Verstärkungsplatte (17B), die mit mehreren Durchgangsöffnungen (19B) ausgestattet ist, die genannte Platte (17B) dient dazu, auf die Oberfläche der genannten Ladefläche (5) gelegt zu werden, damit sich mindestens eine Durchgangsöffnung (19B) teilweise an mindestens einer der genannten Öffnungen (9) der genannten Ladefläche (5) befindet, das genannte Umlenkelement (11B) besteht aus einem Stützkörper, der dazu dient, teilweise durch mindestens eine Öffnung (9) der genannten Ladefläche (5) und mindestens eine Durchgangsöffnung (19B) der genannten Verstärkungsplatte (17B) eingeführt zu werden, der genannte Stützkörper enthält mindestens einen Umlenkteil (21B) des genannten Riemens, der dazu dient, aus einer zweiten Seite (5b) der genannten Ladefläche (5) auszutreten, und mindestens einen Befestigungsteil (23A) des genannten Umlenkelements (11B) an den genannten Öffnungen (9; 19B), der dazu dient, aus einer ersten Seite (5a) der genannten Ladefläche (5) auszutreten; und
- ein drittes Zwischenelement (1C) aus mindestens einem zweiten Befestigungselement von mindestens einem zweiten Endteil des genannten Riemens (3) besteht, die genannten Mitwirkungsmittel wurden entwickelt, um eine Konzentration einer Spannung zu minimieren, die durch eine Kraft des Riemens induziert wird, die senkrecht zur genannten Ladefläche (5) ist, die genannten Mitwirkungsmittel bestehen aus mindestens einem mittleren Bolzen (3C), der dazu dient, mindestens teilweise durch mindestens eine Öffnung (9) der genannten Ladefläche (5) eingeführt zu werden, der genannte mittlere Bolzen (3C) hat ein erstes Ende, das dazu dient, aus einer zweiten Seite (5b) der genannten Ladefläche (5) auszutreten, und ein zweites Ende gegenüber dem genannten ersten Ende, das dazu dient, aus einer ersten Seite (5a) der genannten Ladefläche (5) auszutreten, das genannte erste Ende ist mit mindestens einem Befestigungsteil (5C) zur Verbindung des genannten Riemens ausgestattet, und das genannte zweite Ende ist mit mindestens einer Sperr-/Freigabevorrichtung (7C) ausgestattet, die dazu dient, einen Durchgang von mindestens dem genannten zweiten Ende durch die genannte Öffnung (9) der genannten Ladefläche (5) zu ermöglichen, wenn sie in ihre Freigabebetriebsposition geführt wird, und einen Durchgang von mindestens dem genannten zweiten Ende durch die genannte Öffnung (9) der genannten Ladefläche (5) zu ermöglichen, wenn sie in ihre Sperrbetriebsposition geführt wird, die genannten Mitwirkungsmittel des genannten dritten Zwischenelements (1C) enthalten mindestens ein Anschlagelement (9C) mit größeren Abmessungen als die genannte Öffnung (9) der genannten Ladefläche (5) und gleiten axial längs des genannten mittleren Bolzens (3C) und mindestens ein elastisches Mittel (11C), das zwischen dem genannten Anschlagelement (9C) und dem genannten Befestigungsteil (5C) längs des genannten mittleren Bolzens (3C) angebracht ist, das genannte Anschlagelement (9C) ist mit einem oder mehreren Vorsprüngen (13C) ausgestattet.

2. System gemäß dem vorhergehenden Patentanspruch, das **dadurch gekennzeichnet ist, dass** der genannte Steckteil (13A) eine grundlegend flache Form mit abgerundeten Kanten hat.

3. System gemäß Patentanspruch 1, das **dadurch gekennzeichnet ist, dass** das genannte zweite Zwischenelement (1B) mindestens einen Radkeil (13B) enthält, der genannte Radkeil (13B) enthält mindestens eine Verstärkungsplatte (15B).

4. System gemäß Patentanspruch 1, das **dadurch gekennzeichnet ist, dass** die genannte Sperr-/Freigabevorrichtung (7C) mindestens eine Klinke ist, die sich um eine mittlere Achse des genannten mittleren Bolzens (3C) zwischen der genannten Freigabebetriebsposition und der genannten Sperrbetriebsposition dreht und umgekehrt.

5. System gemäß dem vorhergehenden Patentanspruch, das **dadurch gekennzeichnet ist, dass** sich die genannte Klinke und der genannte Befestigungsteil (5C) einteilig um den genannten mittleren Bolzen (3C) drehen.

6. System gemäß einem beliebigen der vorhergehenden Patentansprüche, das **dadurch gekennzeichnet ist, dass** die genannte Klinke mit einer oder mehreren Ebnungen (15C) ausgestattet ist, die so geformt sind, dass sie auf einen Umfangsteil der genannten Öffnung (9) der genannten ersten Seite (5a) der genannten Ladefläche (5) passen.

## Revendications

1. Système d'ancrage pour sangles de retenue, destiné en particulier à l'utilisation lors du transport de véhicules sur des plateformes de chargement, comprenant trois éléments d'interposition (1A ; 1B ; 1C) positionnés entre la sangle (3) et la plateforme (5) ; les éléments d'interposition (1A ; 1B ; 1C) sont dotés de moyens de coopération avec la plateforme (5) pour réduire au minimum les concentrations de tensions induites par la force exercée par la sangle (3) sur la plateforme (5), et où :
- un premier élément d'interposition (1A) est composé d'un premier élément d'ancrage d'une première portion terminale de la sangle (3) ; les moyens de coopération ont été conçus pour réduire au minimum une concentration de tension induite par une force de la courroie qui est périphérique à la plateforme (5) ; les moyens de coopération sont composés au moins d'un corps de support (11A) apte à être inséré partiellement à travers une ouverture (9) de la plateforme (5) ; le corps de support (11A) comprend au moins une portion de raccord (13A) apte à sortir d'une première face (5a) de la plateforme (5) et au moins une portion d'ancrage (15A) de connexion de la sangle apte à sortir d'une seconde face (5b) de la plateforme (5) ; la seconde face (5b) est opposée à la première face (5a), le corps de support (11A) a une forme substantiellement en « L » où la portion de raccord (13A) est inclinée par rapport à la portion d'ancrage (15A) d'un angle α compris entre 80° et 100°, la portion de raccord (13A) est dotée au moins d'un relief (17A);
- un second élément d'interposition (1B) comprenant au moins un élément de renvoi (11B) d'une portion intermédiaire de la sangle ; les moyens de coopération ont été conçus pour réduire au minimum une concentration de tension induite par une force de la courroie dans une direction avec un angle de 45° par rapport à la plateforme (5) ; les moyens de coopération sont composés au moins d'une plaque de renfort (17B) dotée d'une pluralité d'ouvertures traversantes (19B) ; la plaque (17B) est apte à toucher superficiellement la plateforme (5) de sorte qu'une ouverture traversante (19B) se trouve partiellement au niveau d'une des ouvertures (9) de la plateforme (5) ; l'élément de renvoi (11B) est composé d'un corps de support apte à être inséré partiellement à travers une ouverture (9) de la plateforme (5) et une ouverture traversante (19B) de la plaque de renfort (17B) ; le corps de support comprend au moins une portion de renvoi (21B) de la sangle apte à sortir d'une seconde face (5b) de la plateforme (5) et au moins une portion d'accrochage (23A) de l'élément de renvoi (11B) sur les ouvertures (9; 19B) apte à sortir d'une première face (5a) de la plateforme (5) ; et
- un troisième élément d'interposition (1C) composé au moins d'un second élément d'ancrage d'une seconde portion terminale de la sangle (3) ; les moyens de coopération ont été conçus pour réduire au minimum une concentration de tension induite par une force de la courroie qui est perpendiculaire à la plateforme (5) ; les moyens de coopération sont composés au moins d'un pivot central (3C) apte à être inséré partiellement à travers une ouverture (9) de la plateforme (5) ; le pivot central (3C) possède une première extrémité apte à sortir d'une seconde face (5b) de la plateforme (5) et une seconde extrémité opposée apte à sortir d'une première face (5a) de la plateforme (5) ; cette première extrémité est dotée au moins d'une portion d'ancrage (5C) de connexion de la sangle et cette seconde extrémité est dotée au moins d'un dispositif de blocage/déblocage (7C) apte à permettre, quand il se trouve en position opérationnelle de déblocage, le passage d'une seconde extrémité à travers l'ouverture (9) de la plateforme (5) et empêcher, quand il se trouve en position opérationnelle de blocage, le passage de la seconde extrémité à travers l'ouverture (9) de la plateforme (5) ; les moyens de coopération du troisième élément d'interposition (1C) comprennent au moins un élément de référence (9C) ayant des dimensions plus grandes que l'ouverture (9) de la plateforme (5) et qui coulisse axialement le long du pivot central (3C) et au moins un moyen élastique (11C) interposé entre l'élément de référence (9C) et la portion d'ancrage (5C) le long du pivot central (3C), l'élément de référence (9C) est doté d'un ou plusieurs ergots (13C).

2. Système, selon la revendication précédente, **caractérisé en ce que** la portion de raccord (13A) est substantiellement plate avec les bords arrondis.

3. Système, selon la revendication 1, **caractérisé en ce que** le second élément d'interposition (1B) comprend au moins un cale de blocage de roue (13B) comprenant une plaque de renfort (15B).

4. Système, selon la revendication 1, **caractérisé en ce que** le dispositif de blocage/déblocage (7C) est un cliquet tournant autour d'un axe central du pivot central (3C) entre la position opérationnelle de déblocage et la position opérationnel de blocage, et inversement.

5. Système, selon la revendication précédente, **caractérisé en ce que** le cliquet et la portion d'ancrage (5C) sont solidaires en rotation autour du pivot central (3C).

6. Système, selon l'une des revendications précédentes, **caractérisé en ce que** le cliquet est doté d'un ou de plusieurs aplatis (15C) conformés pour se marier à la portion périmétrique de l'ouverture (9) de la première face (5a) de la plateforme (5).
